# EUROPEAN PATENT SPECIFICATION

(11) **EP 2 713 777 B1**
(45) Date of publication and mention of the grant of the patent: **03.01.2018**
(21) Application number: 12735666.5
(22) Date of filing: 30.05.2012
(51) Int. Cl.: A23L 33/12, A23L 33/00

(54) **HEALTH-GIVING FOODSTUFF CONTAINING ETHYL ESTERS OF FATTY ACIDS OF LINSEED OIL, AND METHOD FOR OBTAINING THE SAME**
GESUNDHEITSFÖRDERNDE NAHRUNGSMITTEL MIT ETHYLESTERN DER FETTSÄUREN DES LEINÖLS, UND VERFAHREN ZU SEINER HERSTELLUNG
DENRÉE ALIMENTAIRE BÉNÉFIQUE POUR LA SANTÉ CONTENANT DES ESTERS ÉTHYLIQUES D'ACIDES GRAS D'HUILE DE LIN, ET PROCÉDÉ POUR L'OBTENIR

(30) Priority: 30.05.2011 PL 39505211
(43) Date of publication of application: 09.04.2014
(73) Proprietor: 3L Invent Sp. z o. o., 30-611 Kraków (PL)
(72) Inventor: ZAJAC, Tadeusz Stanislaw, PL-30-011 Kraków (PL); ZAJAC, Piotr, PL-31-618 Kraków (PL); ZANDER, Zygmunt, PL-10-579 Olsztyn (PL); ZANDER, Lidia Bozena, PL-10-579 Olsztyn (PL); DAJNOWIEC, Fabian Julian, PL-10-689 Olsztyn (PL); BANASZCZYK, Pawe, PL-14-300 Mor g (PL)
(74) Representative: Kacperski, Andrzej
(86) International application number: PCT/PL2012/000041
(87) International publication number: WO 2012/165983

(56) References cited:
- US-A1- 2004 017 017
- DATABASE WPI Week 201128 Thomson Scientific, London, GB; AN 2011-C47647 XP002681997, "Preparation of fish oil ethyl ester microcapsules, involves removing impurity of bowel of fish, enzymolyzing, demulsifying obtained oil phase and decoloring to obtain refined fish oil, and producing ester using fish oil and ethanol", -& CN 101 940 240 A (UNIV DALIAN POLYTECHNIC) 12 January 2011 (2011-01-12)
- DATABASE WPI Week 201031 Thomson Scientific, London, GB; AN 2010-D58326 XP002681998, "Microcapsule useful for medicine, food and beverage comprises doxosahexaenoic acid fish oil, antioxidant, wall material and auxiliary wall material", -& CN 101 669 920 A (FUNING HUAIREN BIOLOGICAL CO LTD) 17 March 2010 (2010-03-17)
- Ewelina Lesiak: "Nowosc na Swiatowym Rynku!!! LINELIFE- Koncentrat Omega 3,6,9 VitaminFconcept* - forum Pokonac Raka - GoldenLine.pl", Goldenline.Pl, 12 November 2009 (2009-11-12), pages 1-4, XP055249935, Retrieved from the Internet: URL:http://www.goldenline.pl/grupy/Kobiety _zdrowie_uroda/pokonac-raka/nowosc-na-swia towym-rynku-linelife-koncentrat-omega-369- vitaminfconcept,1289254/ [retrieved on 2016-02-15]
- JACEK PRZYGODZKI: 'Rewelacyjny pod wzgledem zdrowotnym polski produkt LeenLife zawierajacy kwasy Omega-3.' INTERNET CITATION, [Online] 30 November 2011, pages 1 - 4, XP055249936 Retrieved from the Internet: <URL:http://www.roik.pl/rewelacyjny-pod-wzg ledem-zdrowotnym-polski-produkt-zawierajacy -kwasy-omega-3/> [retrieved on 2016-02-15]

## Description

The subject of the invention is a health-giving foodstuff containing ethyl esters of linseed oil and method for obtaining the same.

PL 201 959 presents a method for obtaining of health-giving dairy products and health-giving food dairy product.

The method consists in that after initial milk processing, specific for a defined product, there is added 3 to 10% of a milk-oil emulsion made of milk and oil composition containing polyunsaturated fatty acids, namely omega-3, preferably docosahexaenoic acid - DHA and/or eicosapentaenoic acid - EPA, to a prepared in known way raw material and/or a semi-finished dairy product suitable for a obtained product. The emulsion is homogenised at temperature 60-70°C and pressure of at least 15 MPa. Polyunsaturated fatty acids are usually of natural origin. Then, there is added an anti-oxidative vitamins A, C, E composition in form of a solution and at amount justified by nutrition and physiology, followed by technological processing of the emulsion and the combination which is necessary for obtaining a defined product, and, depending on needs, there are added known additives, namely stabilizing salts and thickeners, powdered milk and flavours at adequate stage of the product manufacturing.

The health-giving dairy product is characterised by that it contains the milk-oil emulsion prepared with oils containing polyunsaturated fatty acids, namely of omega-3 group, preferably of natural origin and it contains the composition of anti-oxidative vitamins, particularly A, C, E vitamins and known additives, particularly stabilizing salts, thickeners, powdered milk and flavours at amounts justified by technology.

PL 203 686 disclosures a feed additive, method for manufacturing of the feed additive, feed composition containing the feed additive and usage of the feed additive in feeds.
The feed additive containing chemical compounds with unsaturated acid radicals is characterised by that it contains fatty acids salts, at least of linseed oil, with metals of 1 and/or 2 group of the periodical table or preferably NH4⁺, in which ratio of salts of polyunsaturated fatty n-6 acids to n-3 ones is 0,1 -1,0 : 1.

The method for obtaining of the feed additive consist in that a fat emulsion, preferably of linseed oil in water, is treated with oxides or hydroxides of metals of 1 and/or 2 group of the periodic table or preferably with NH4⁺ at room temperature, or preferably with NH4⁺ at temperature elevated up to boiling point and at stoichiometric or larger amount of a metal oxide or hydroxide or ammonium hydroxide. Obtained precipitate is filtrated, washed out with water and dried, and the obtained fatty acids salts are incorporated into a final product, preferably together with anti-oxidants.

Feed composition with the feed additive, comprising of a feed and other nutritious products and/or other materials used in nutrition of commercial animal herds is characterised by that it contains from 4-12 percent by weight of the feed additive in a powdery form and which consist of fatty acids salts, at least of linseed oil with metals of 1 and/or 2 group of the periodic table or preferably NH4⁺, in which ratio of salts of n-6 polyunsaturated acids to n-3 ones is 0,1-1,0 : 1. The prepared composition for animals feeding with the feed additive contains polyunsaturated fatty acids and metal and/or ammonium salts of these fatty acids of n-6 to n-3 at ratio 2-6:1. The feed additive contains salts of conjugated linoleic acids with metals of 1 and/or 2 group of the periodic table or preferably NH4⁺ at amount of 40 percent by weight of a dry mass of the feed additive.

Use of the feed additive is foreseen in rearing animals at the end of fattening period with addition of the additive at amount of 4-12 percent by weight of a dry mass of the feed additive.

PL P386607 describes a nutritional additive, method for its manufacturing and the installation for implementation of this method, and the use of the nutritional additive manufactured by this method. The nutritional additive consists of active substances, particularly of polyunsaturated fatty acids in form of a concentrate of saturated and unsaturated ethyl esters of long-chain fatty acids, namely of linseed oil. Furthermore the nutritional additive consist of active substances, namely polyunsaturated essential fatty acids in form of ethylamids of long-chain fatty acids, namely of linseed oil. Also, the nutritional additive consist of active substances, namely of polyunsaturated fatty acids in form of a mixture of concentrate of ethyl esters of long-chain fatty acids, namely linseed oil, and of ethylamids of long-chain fatty acids, namely of linseed oil constitute the nutritional additive.

The method for obtaining of the nutritional additive consists in a process of transesterification of esters with glycerides of raw oil, namely linen oil with 16- to 18- fold excess of directly dehydrated, pharmaceutical ethanol (anhydrous) of concentration at least 99,8% and with a catalyser - ethanol solution of alkali metal hydroxide, for example of potassium hydroxide, conducted in oxygen-free atmosphere saturated with gaseous nitrogen up to balance state with protected clean in order to protect from humidity, carbon dioxide and atmosphere oxygen, at preferably room temperature by effective homogenisation of the reaction mixture resulting from mixing with ejectors supported by circulation pumps with protection of spherical conformation c/s of fatty acids. Then, at least one-step distillation of unreacted ethanol is carried out under underpressure of at least 95 kPa and at maximal temperature of 80°C - vapour condensation by a coat-like condenser and separation of the remaining mixture to ester and glycerol phases followed by purification of the ester phase undergoes further processing. The final product is dispensed and transferred to a warehouse.

CN 101 940 240 A (DATABASE WPI Week 201128, Derwent Publications Ltd., London, GB; AN 2011-C47647, XP002681997) describes a method for preparing a fish oil ethyl ester microcapsule from fish pomace, which mainly comprises the extraction of fish oil, the preparation of fish fatty acid ethyl ester, the purification of fish oil ethyl ester and the preparation of a fish oil ethyl ester microcapsule, wherein the extraction of fish oil comprising the following steps: eliminating foreign matters from fish viscus, cleaning, mashing, adding pepsin and neutral protease for enzymolysis, then adding anhydrous alcohol, standing to stratify, and centrifuging to obtain the fish oil; the preparation of fish fatty acid ethyl ester comprising the following steps: mixing the fish oil with ethanol, making the mixture to be subject to an esterification reaction under the catalysis of sodium ethylate, vaporizing the ethanol, washing with water and then centrifuging to obtain the fish oil ethyl ester; in the purification process, supercritical CO₂ extraction is adopted, the purified fish oil ethyl ester is a golden yellow transparent liquid, and EPA ethyl ester and DHA ethyl ester contents thereof are more than 50%; and the preparation of a fish oil ethyl ester microcapsule comprises the following steps: mixing sodium alginate, maltodextrin and sodium caseinate, dissolving in water, adding the purified fish oil ethyl ester, and adopting a spray drying method to obtain the powdered fish oil ethyl ester microcapsule which can hide the fishy smell of the fish oil ethyl ester, improve the mouth feel and be beneficial to packaging and storage.

CN 101 669 920 A (DATABASE WPI Week 201031, Derwent Publications Ltd., London, GB; AN 2010-D58326, XP002681998) relates to a strong anti-oxidation DHA microcapsule. The microcapsule comprises the following components in percentage by weight: 10 to 30 percent of DHA fish oil, 0,02 to 0,2 percent of antioxidant, 10 to 60 percent of wall material, and 5 to 30 percent of auxiliary wall material. The invention also relates to a method for preparing the strong anti-oxidation DHA microcapsule. On the basis of the prior process, the microcapsule is prepared by adding the antioxidant to oil phase and water phase respectively and performing emulsification, high-pressure homogenisation, improved spray granulation and cold-air boiling-drying. The newly added antioxidant can produce better anti-oxidation effects and greatly improve the oxidation stability of the DHA microcapsule so as to prolong the shelf life of products, and the improved spray granulation and the cold-air boiling-drying process can increase the yield of the DHA microcapsule. The DHA microcapsule can be used in the fields of medicines, foods, beverages and the like.

US 2004 017017 A1 (Van Lengerich Bernhard H. et al.) describes a stabilized emulsion employed to produce shelf stable, controlled release, discrete, solid particles or pellets which contain an encapsulated and/or embedded component such as a readily oxidisable component, such as omega-3 fatty acids. An oil encapsulant component which contains an active, sensitive encapsulant dissolved and/or dispersed in an oil is admixed with an aqueous component and a film-forming component to form an emulsion. An antioxidant for prevention of oxidation of the active, sensitive encapsulant and a film-softening component or plasticizer for the film-forming component may be included in the emulsion. The emulsion is stabilized by subjecting it to homogenisation. The pellets are produced by first reducing the water content of the stabilized emulsion so that the film-forming component forms a film around the oil droplets and encapsulates the encapsulant. In embodiments of the invention, the water content of the homogenised emulsion may be reduced by spray-drying to produce a powder. In other embodiments of the invention, after homogenisation the water content of the emulsion may be reduced by admixing the emulsion with at least one matrix material to thereby encapsulate the film-coated oil droplets within the matrix material. After the water content of the emulsion is reduced, a protective coating is applied on the film-coated oil droplets to obtain pellets.

Internet Publication of 2009-11-12: http://www.goldenline.pl/grupy/Kobiety_zdrowie_uroda/pokonac-raka/nowosc-na-swiatowym-rynku-linelife-koncentrat-omega-369-vitaminfconcept,1289254/

discloses a composition comprising alpha-linolenic acid (ALA) and linoleic acid (LA) for supporting body functions and immune system. The composition "Vitamin F Concept" of LeenLife Company (PL) contains: 60 % ethyl esters of ALA (omega-3), 20 % of ethyl esters of LA (omega-6), 10 % LA (omega-9), 10 % of fatty acids. The composition is a liquid.

The problem to be solved and the aim of the invention is to obtain of a health-giving foodstuff containing a concentrate of ethyl esters of fatty acids, namely of linseed oil, as a nutraceutical, as well as development of its obtaining method.

Due to the fact that the ethyl esters are in form of oily, strongly hydrophobic liquid with specific taste and smell, which makes their use inconvenient, there has been considered a change of the ester form to a solid form - powder. It has been also considered an increase of nutritional value of a product and maintenance its health-giving properties.

It became necessary to ensure microbiological purity of the powder composed only of edible components and totally free of toxic substances.

It was found that the bioactivity and microbiological purity of ethyl esters of acids ALA and LA can be used.

The aim and the problem of the invention is solved by the health-giving foodstuff containing ethyl esters of fatty acids of linseed oil characterised in that it is constituted of microcapsules in a form of powder, which contains, in a protein-carbohydrate matrix, a nutraceutical with bioactive ethyl esters of acids ALA (α-Linolenic acid) and LA (Linoleic acid) in a form of drops of diameter less than 2 µm, with not more than 4 percent by weight addition of ethanol based on at least 99,8% anhydrous pharmaceutical ethanol, wherein in the protein-carbohydrate matrix as proteins there are used milk proteins concentrates with decreased lactose concentration, containing minimum 30 percent by weight of proteins and/or plant proteins concentrates, wherein in the protein-carbohydrate matrix as carbohydrate there is used low saccharification maltodextrin with DE index not higher than 13.

Microcapsules diameter is 20 - 270 µm. The protein-carbohydrate matrix contains minimal amount up to 5 percent by weight flavouring-colouring additives such as β-carotene, lemon juice, orange juice, aromas and colourings, vitamins, bio-elements and optionally, addition of soya lecithin up to 2 percent by weight.

A method for obtaining a health-giving foodstuff containing ethyl esters of linseed oil, is characterised in that after obtaining a liquid protein-carbohydrate matrix, a nutraceutical containing bioactive ethyl esters of acids ALA (α-Linolenic acid) and LA (Linoleic acid) is introduced into it, followed by carrying out a dispergation of the ester phase by mechanical agitation until a stable form of emulsion is obtained. Then the emulsion is treated with two-steps and two-stages pressure homogenisation: in 1^{st} stage - at pressure of 20 MPa - 25MPa on the 1^{st} step and 4 MPa - 5MPa in the 2^{nd} step at a temperature of 50-70°C, and in 2^{nd} stage - at pressure of 30 MPa - 60MPa at a temperature of 40-70°C in the 1^{st} step and 10 MPa -15 MPa at a temperature of 50-70°C in the 2^{nd} step.

Homogenisation during the 1^{st} stage is carried out in a process coupled with thermal processing of the emulsion, which is then spray dried in atmosphere at a temperature 160-190°C in the inlet of a drying cabinet and the powder is dispensed in a neutral gas atmosphere.

After homogenisation of the 1^{st} stage and before homogenisation of the 2^{nd} stage, the emulsion may be put aside for 6 hours, and after that may be warmed up to 50 -70°C.
A continuous phase of the emulsion is obtained, preferably, by dissolving in water of temperature about 30°C the matrix components, that is proteins and polysaccharides, followed by protein hydration and the nutraceutical is introduced after hydration of the components. The protein hydration is carried out at temperature 25-35°C for about 4 hours.

During thermal processing the stable emulsion is, preferably, warmed up to temperature 50 - 65°C, pasteurised and cooled down to about 10°C.

During storage and dispensing of the health-giving foodstuff may be carried out in nitrogen as a neutral gas atmosphere.

The health-giving foodstuff in form of a powder is as well absorbed by living beings as nutraceutical as such, which can pelletized, encapsulated or use for production of butter, cheese, fermented dairy drinks, sausages, baker's goods, pastas, and in addition it has higher nutritive value as it is enriched by proteins and carbohydrates if microcapsules matrix. It creates more possibilities of its usage as a diet supplement / food supplement / enriched foodstuff as a component of substances both in liquid and solid form, because structure of inside allows its reproduction in form of emulsion, conveniently with concentration of the ingredients from 35 - 45%.

The nutraceutical structure and the health-giving foodstuff in form of microcapsules are presented on microscope pictures enclosed to this description.

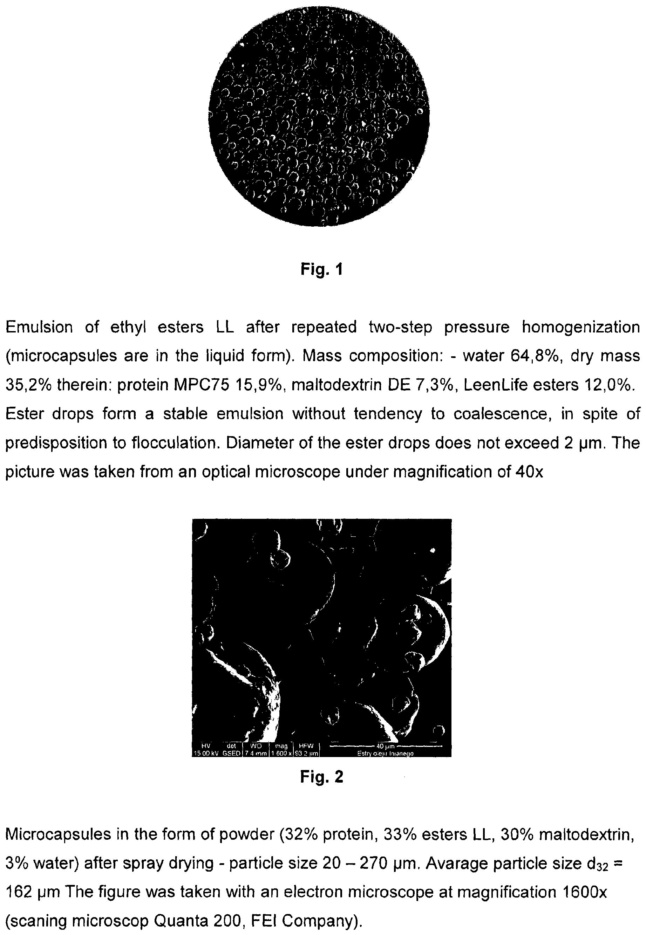

Fig. 1. It presents emulsion of ethyl esters of fatty acids of linseed oil after repeated two-step pressure homogenisation - microcapsules after dissolving. Ester drops form a stable emulsion without tendency to coalescence, in spite of predisposition to flocculation. Diameter of the ester drops does not exceed 2 µm. The picture was taken from an optical microscope under magnification of 40x.
Fig. 2. It presents microcapsules in form of powder after spray drying of microcapsule dimensions 20 - 270 µm. The picture was taken with an electron microscope at magnification 1600x.

Microbiological quality of the health-giving foodstuff is comparable with powdered milk for babies. It has neutral taste and there is no smell specific for esters.

In the method according to this invention there are used only edible components of natural origin, and no emulsifiers obtained by chemical synthesis and in this way thermal and chemical disintegration of raw materials is avoided. As a consequence of two-stage and two-step pressure homogenisation there is achieved guaranty of closure of the bioactive substance - ethyl esters of acids ALA, LA - inside structure of powder particles. Dehydration of microcapsules matrix by skillful spray drying makes impossible microorganisms growth inside the microcapsules as result of drastic decrease of water activity.

The inventions is closer explained in the examples showing composition of dry mass of the health-giving foodstuff expressed in percent by weight and method for obtaining the same.

### Examples

The subject of the invention is shown closer in preferred examples of its realisation. The examples of realisation shall not be considered in any case as an exhaustive and limiting the presented inventions, and which nature has been characterised in patent claims.

### Example 1

- low-saccharification maltodextrin DE 7-13: 50,0 percent by weight
- milk protein concentrate MPC 75: 16,7 percent by weight
- ethyl ester of acids ALA and LA: 33,3 percent by weight

### Comparative example 1

- low-saccharification maltodextrin: 50,0 percent by weight
- soya protein isolate: 20,0 percent by weight
- ethyl ester of acids ALA and LA: 30,0 percent by weight

### Comparative example 2

During mixing, to 40 dm³ of water warmed up to about 30°C there are added 30,5 kg of low-saccharification maltodextrin DE 7-13, 10 kg of soya protein isolate and 25 dag of lecithin. After dispersing of the ingredients, the obtained emulsion is put aside for 5 hours at temperature of about 30°C in order to protein hydration. Then, during the continuous mixing, there is added 19,5 kg ethyl esters available under commercial name LeenLife E and all of them is still mixing until stable emulsion isobtained. The obtained stable emulsion is thermally treated, which includes: warming up to temperature of 40°C, pasteurisation at 70°C, and cooling down to 9°C in a cycle coupled with process of pressure homogenisation at temperature of about 50°C at pressure about 23 MPa at the first step and about 5 MPa on the second step.

After achieving drops of esters of diameter up to 6 µm, the emulsion is transferred to the second stage of the pressure homogenisation at pressure about 47 MPa at the first step and about 15 MPa at the second step. Then, after achieving drops of esters with a diameter up to 1 µm, the emulsion is directed to spray drying in a stream of hot air of temperature about 190°C at inlet and about 90°C at outlet of a dryer. There are obtained 58 kg of the health-giving foodstuff according to the invention.

### Examples 2

During mixing, to 66 dm³ of water warmed up to temperature of about 35°C there is added 18 kg of low-saccharification maltodextrin DE 7-13, and 6,2 kg of milk protein concentrate MPC 75 and addition of 30 dag of lemon juice. After dissolution of the ingredients, the obtained emulsion is put aside for 3 hours at temperature of 30-20°C in order to hydrate proteins. Then, during mixing, there is added 12,1 kg of ethyl esters available under brand name LeenLife E and there is carried out dispersion of ester phase by mixing. The obtained stabile emulsion is treated thermally: warming up to 45°C, pasteurisation 70°C and cooling down to 10°C in cycle coupled with the first stage of pressure homogenisation at temperature about 55°C at pressure about 23 MPa at the first stage and about 4 MPa at the second stage.

After achieving drops of esters a diameter less than 6 µm, the emulsion is left for 3 hours at temperature 10°C. After warming up to about 50°C, the emulsion is directed to pressure homogenisation at pressure 45 MPa at the first step and 14MPa at the second step. Then, after achieving some drops of esters with a diameter smaller than 2 µm, the emulsion is transferred to spray drying at temperature about 170°C at inlet and about 90°C at outlet. There are obtained 36 kg of the health-giving foodstuff according to the invention.

## Claims

1. A health-giving foodstuff containing ethyl esters of fatty acids of linseed oil, **characterised in that** it is constituted of microcapsules in a form of powder, which contains, in a protein-carbohydrate matrix, a nutraceutical with bioactive ethyl esters of acids ALA (α-Linolenic acid) and LA (Linoleic acid) in a form of drops of diameter less than 2 µm, with not more than 4 percent by weight addition of ethanol based on at least 99,8% anhydrous pharmaceutical ethanol, wherein in the protein-carbohydrate matrix as proteins there are used milk proteins concentrates with decreased lactose concentration, containing minimum 30 percent by weight of proteins and/or plant proteins concentrates, wherein in the protein-carbohydrate matrix as carbohydrate there is used low saccharification maltodextrin with DE index not higher than 13.

2. The foodstuff according to claim 1, **characterised in that** microcapsules diameter is 20 - 270 µm.

3. The foodstuff according to claim 1, **characterised in that** the protein-carbohydrate matrix contains minimal amount up to 5 percent by weight flavouring-colouring additives such as β-carotene, lemon juice, orange juice, aromas and colourings, vitamins, bio-elements and optionally, addition of soya lecithin up to 2 percent by weight.

4. A method for obtaining a health-giving foodstuff containing ethyl esters of fatty acids of linseed oil, by mixing of ingredients, their homogenisation, drying, **characterised in that** after obtaining a liquid protein-carbohydrate matrix, a nutraceutical containing bioactive ethyl esters of acids ALA (α-Linolenic acid) and LA (Linoleic acid) is introduced into it, followed by carrying out a dispergation of the ester phase by mechanical agitation until a stable form of emulsion is obtained, which is then treated with two-steps and two-stages pressure homogenisation: in 1^{st} stage - at pressure of 20 MPa - 25MPa on the 1^{st} step and 4 MPa - 5MPa in the 2^{nd} step at a temperature of 50-70°C, and in 2^{nd} stage - at pressure of 30 MPa - 60MPa at a temperature of 40-70°C in the 1^{st} step and 10 MPa -15 MPa at a temperature of 50-70°C in the 2^{nd} step, whilst homogenisation during the 1^{st} stage is carried out in a process coupled with thermal processing of the emulsion, which is then spray dried in atmosphere at a temperature 160-190°C in the inlet of a drying cabinet and the powder is dispensed in a neutral gas atmosphere.

5. The method according to claim 4, **characterised in that** after homogenisation of the 1^{st} stage and before homogenisation of the 2^{nd} stage, the emulsion is put aside for 6 hours, and after that is warmed up to 50 - 70°C.

6. The method according to claim 4, **characterised in that** a continuous phase of the emulsion is obtained by dissolving in water of temperature about 30°C the matrix components, that is proteins and polysaccharides, followed by protein hydration and the nutraceutical is introduced after hydration of the components.

7. The method according to claims 4 or 6, **characterised in that** protein hydration is carried out at temperature 25-35°C for about 4 hours.

8. The method according to claim 4, **characterised in that** during thermal processing the stable emulsion is warmed up to temperature 50 - 65°C, pasteurised and cooled down to about 10°C.

9. The method according to claim 4, **characterised in that** during storage and dispensing of the health-giving foodstuff is carried out in nitrogen as a neutral gas atmosphere.

## Patentansprüche

1. Das gesundheitsfördernde Nahrungsmittel mit Ethylestern der Fettsäuren des Leinöls, **dadurch gekennzeichnet, dass** es aus Mikrokapseln in Form des Pulvers besteht, die in der Protein-Kohlenhydrat-Matrix das Nutrazeutikum mit bioaktiven Ethylestern der Fettsäure ALA (Alpha-Linolensäure) und Fettsäure LA (Linolsäure) in Form eines Tropfens mit dem Durchmesser von mindestens 2 µm, mit dem Zusatz von maximal Gew.-4% des Ethanols berechnet als pharmazeutisches wasserfreies Ethanol mit der Stärke von mindestens 99,8% enthalten, dabei wird in der Protein-Kohlenhydrat-Matrix als Protein das Milchproteinkonzentrat mit reduziertem Laktosengehalt verwendet, das mindestens Gew.-30% von Proteinen und/oder konzentriertes pflanzliches Protein enthält, und als Kohlenhydrat wird zuckerarmes Maltodextrin mit dem DE-Wert von maximal 13 verwendet.

2. Das Nahrungsmittel nach Anspruch 1, **dadurch gekennzeichnet, dass** die Mikrokapseln das Durchmesser von 20 - 270 µm haben.

3. Das Nahrungsmittel nach Anspruch 1, **dadurch gekennzeichnet, dass** die Protein-Kohlenhydrat-Matrix in der minimalen Menge bis Gew.-5% Geschmacks- und Farbstoffen enthält, wie β-Carotin, Zitronensaft, Orangensaft, Aromas und Farbstoffen, Vitamine, Bioelemente und möglicherweise zusätzlich bis Gew.-2% von Sojalecithin.

4. Verfahren zur Herstellung des gesundheitsfördernden Nahrungsmittels, das Ethylester der Fettsäure des Leinöls enthält, durch Mischung der Zutaten, Homogenisierung, Trocknen, **dadurch gekennzeichnet, dass** nach Herstellung der flüssigen Protein-Kohlenhydrat-Matrix das Nutrazeutikum mit bioaktiven Ethylestern der Fettsäure ALA (Alpha-Linolensäure) und der Fettsäure LA (Linolsäure) darin eingeführt wird und die Dispergierung der Esterphase durch mechanische Mischung bis zur Entstehung der stabilen Emulsion durchgeführt wird, die danach der zweiteiligen und zweistufigen Druckhomogenisierung unterworfen wird: in dem 1. Teil - beim Druck von 20 MPa - 25 MPa in der 1. Stufe und 4 MPa - 5 MPa in der 2. Stufe bei Temperatur von 50 - 70°C, und in dem 2. Teil - beim Druck von 30 MPa - 60 MPa bei Temperatur von 40 - 70°C in der 1. Stufe und 10 - 15 MPa bei der Temperatur von 50 - 70°C in der 2. Stufe, dabei wird die Homogeniesierung in dem 1. Teil in dem Verfahren durchgeführt, das mit der Warmbearbeitung der Emulsion gekoppelt ist, die dann in der Luft bei Temperatur von 160-190°C am Einlauf der Trockenkammer sprühgetrocknet wird und das Pulver wird in der Atmosphäre der Inertgase verpackt.

5. Das Verfahren nach Anspruch 4., **dadurch gekennzeichnet, dass** nach der Homogeniesierung in dem 1. Teil und vor der Homogeniesierung in dem 2. Teil die Emulsion für 6 Stunden abgestellt wird und danach bis zur Temperatur von 50 - 70°C erhitzt wird.

6. Das Verfahren nach Anspruch 4, **dadurch gekennzeichnet, dass** die kontinuierliche Phase der Emulsion durch Auflösen der Zutaten der Matrix, d.h. von Proteinen und Polysacchariden im Wasser mit Temperatur von za. 30°C erhalten wird, und dann die Hydratisierung von Proteinen durchgeführt wird und nach Hydratisierung der Zutaten das Nutrazeutikum eingeführt wird.

7. Das Verfahren nach Anspruch 4 oder 6, **dadurch gekennzeichnet, dass** die Hydratisierung von Proteinen in der Temperatur von 25-35°C über za. 4 Stunden durchgeführt wird.

8. Das Verfahren nach Anspruch 4, **dadurch gekennzeichnet, dass** bei der Warmbearbeitung die stabile Emulsion bis zur Temperatur von 50 - 65°C erhitzt, pasteurisiert und bis za. 10°C abgekühlt wird.

9. Das Verfahren nach Anspruch 4, **dadurch gekennzeichnet, dass** bei der Aufbewahrung und Verpackung des gesundheitsfördernden Lebensmittels die Schutzatmosphäre des Stickstoffes als Inertgas verwendet wird.

## Revendications

1. Denrée alimentaire bénéfique pour la santé contenant des esters éthyliques d'acides gras d'huile de lin **caractérisée en ce que** qu'elle est constituée de microcapsules sous forme de poudre, qui contiennent, dans une matrice protéine-glucide, un nutraceutique avec des esters éthyliques biologiquement actifs d'acides ALA (acide alpha-linolénique) et LA (acide linolénique) sous forme de gouttes de diamètre inférieur à 2 µm, avec pas plus de 4 pour cent en poids d'addition d'éthanol, rapporté à l'éthanol pharmaceutique anhydre à au moins 99,8 %, et dans la matrice protéine-glucide est utilisé comme protéine le concentré de protéine de lait à faible teneur en lactose, contenant au moins 30% en poids de protéines et/ou de concentré de protéines végétales et comme glucide est utilisée la maltodextrine pauvre en sucre avec un indice DE non supérieur à 13.

2. Denrée alimentaire selon la revendication 1 **caractérisée en ce que** les microcapsules ont un diamètre de 20 à 270 µm.

3. Denrée alimentaire selon la revendication 1 **caractérisée en ce que** la matrice protéine-glucide contient une quantité minimale, ne dépassant pas 5% en poids, d'agents aromatisants et colorants tels que bêta-carotène, jus de citron, jus d'orange, arômes et colorants, vitamines, oligo-éléments et, éventuellement, moins de 2% en poids de lécithine de soja.

4. Le procédé d'obtention de la denrée alimentaire bénéfique pour la santé contenant des esters éthyliques d'acides gras d'huile de lin par mélange des ingrédients, leur homogénéisation, leur séchage **caractérisé en ce qu'**après l'obtention d'une matrice protéine-glucide liquide, y est introduit un nutraceutique contenant des esters éthyliques biologiquement actifs d'acides ALA (acide alpha-linolénique) et de LA (acide linolénique), puis une dispergation de la phase ester est mise en oeuvre par agitation mécanique jusqu'à l'obtention d'une forme stable d'émulsion qui est ensuite traitée par une homogénéisation sous pression en deux étapes et à deux stades : dans la première étape - à une pression de 20 MPa à 25 MPa dans le 1^{er} stade et de 4 MPa à 5 MPa dans le 2^{e} stade à une température de 50 à 70°C et, dans la seconde étape, - à une pression de 30 MPa à 60 MPa, à une température de 40 à 70°C dans le premier stade et de 10 à 15 MPa à une température de 50 à 70°C dans le 2^{e} stade, et l'homogénéisation dans la première étape est mise en oeuvre dans un procédé couplé avec un traitement thermique de l'émulsion qui est ensuite séchée par atomisation dans l'air à une température de 160 à 190°C dans l'entrée d'une armoire de séchage et la poudre est confectionnée dans une atmosphère de gaz neutre.

5. Le procédé selon la revendication 4 **caractérisée en ce que**, après l'homogénéisation pendant la 1^{ère} étape et avant l'homogénéisation pendant la 2^{e} étape, l'émulsion se repose pendant 6 heures et, ensuite, elle est chauffée à une température de 50 à 70°C.

6. Le procédé selon la revendication 4, **caractérisée en ce que** la phase continue de l'émulsion est obtenue par dissolution dans l'eau à une température d'environ 30°C des ingrédients de la matrice, c'est-à-dire des protéines et des polysaccharides et, ensuite, est mise en oeuvre l'hydratation des protéines et le nutraceutique est introduit après l'hydratation des ingrédients.

7. Le procédé selon la revendication 4 ou 6 **caractérisée en ce que** le processus d'hydratation des protéines est mis en oeuvre à une température de 25 à 35°C pendant environ 4 heures.

8. Le procédé selon la revendication 4 **caractérisée en ce que** durant le processus de traitement thermique l'émulsion stable est chauffée à la température de 50 à 65°C, pasteurisée et refroidies à environ 10°C.

9. Le procédé selon la revendication 4 **caractérisée en ce que** la denrée alimentaire bénéfique pour la santé est stockée et confectionnée dans l'atmosphère de protection de l'azote en tant que gaz inerte.
